# EUROPEAN PATENT APPLICATION

(11) **EP 4 501 695 A1**
(43) Date of publication of application: **05.02.2025**
(21) Application number: 23189676.2
(22) Date of filing: 04.08.2023
(51) Int. Cl.: B60L 53/12, B60L 53/122, B60L 53/126, B60L 53/38, H02J 50/10

(54) **AN ELECTRIC VEHICLE CHARGING SYSTEM AND METHOD AND AN ELECTRIC VEHICLE**

(71) Applicant: Koninklijke Philips N.V., 5656 AG Eindhoven (NL)
(72) Inventor: VAN DER WONING, Mark Ronald, 5656AG Eindhoven (NL); RIETSTRA, Friso, 5656AG Eindhoven (NL); ETTES, Wilhelmus Gerardus Maria, 5656AG Eindhoven (NL); VAN DER PLOEG, Erik, 5656AG Eindhoven (NL)
(74) Representative: Philips Intellectual Property & Standards

(57) **Abstract**

Charging of electric vehicles is achieved using wireless power transfer between a transmitting coil of a charging station and a receiving coil which is integrated into a wheel of the vehicle. One aspect is a docking unit, for receiving the wheel of the vehicle, with a drive arrangement for rotating the received wheel. Relative alignment between the transmitting coil and the receiving coil is detected, and the drive arrangement is controlled to provide a desired relative alignment between the transmitting coil and the receiving coil in response to the detected relative alignment. Another aspect is that the wireless charging receiving coil is incorporated into the wheel and comprises a loop which includes an arcuate portion of the wheel rim, wherein the arcuate portion of the wheel rim is for receiving in a closable opening a core of the transmitting coil of the vehicle charging system. Another aspect is a rotary electrical coupling between the wireless charging receiving coil and battery charging circuitry. An actuator is provided for controlling mechanical engagement of the electrical coupling such that the electrical coupling is engaged in preparation for charging.

## Description

### FIELD OF THE INVENTION

This invention relates to electric vehicles, and in particular to the charging of electric vehicles. The invention relates in particular to light electric vehicles, such as bicycles and scooters, or self-balancing monocycles.

### BACKGROUND OF THE INVENTION

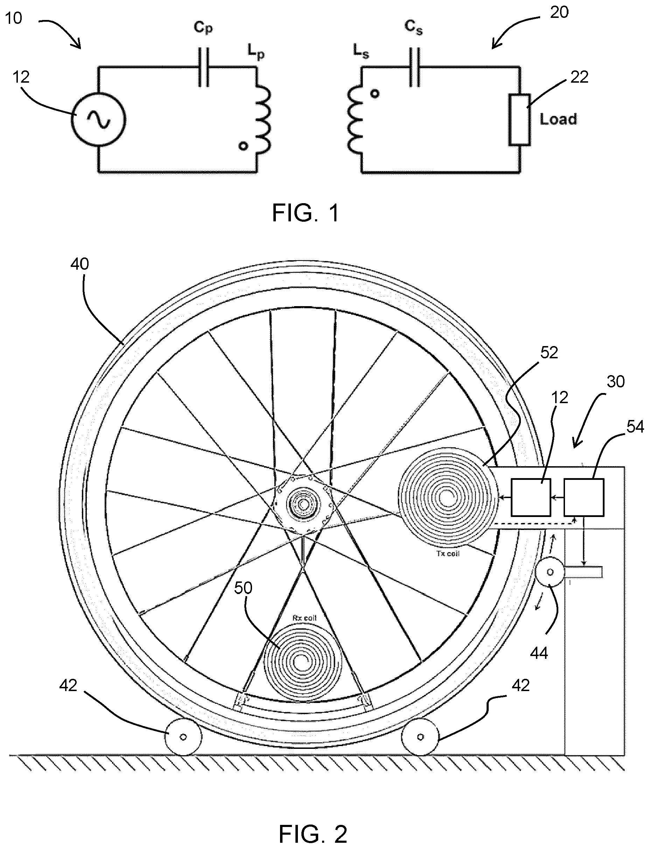

It is known that Light Electrical Vehicles (LEVs) can be charged wirelessly by means of a wireless charging system. Fig. 1 shows a basic wireless charging system, comprising a wireless power transmitter 10 and a wireless power receiver 20.

The wireless power transmitter 10 comprises a transmitter (primary) coil Lp, a resonant network and an inverter 12. The wireless power receiver 20 comprises a receiver (secondary) coil Ls, a resonant network and a load 22 in the form of a battery.

Between the coils there is a mutual inductive coupling. The level of mutual coupling is expressed by the K-factor and is in practical systems of the order of 0.1 to 0.8. As a result of the mutual coupling between the coils, power can be received by the wireless power receiver to charge the battery (load). The resonant networks on both sides are used to optimize the power transfer efficiency between the two sub-systems.

The advantage of a wirelessly charged LEV is that no charging cables are needed. Instead, the LEV is simply parked in a charging booth and the LEV will be charged. In a known booth charging system, the LEV, such as an electric bicycle, is parked with its front wheel located between two pillars of the booth or is leant against the booth. The wireless power receiver of the bicycle is typically fixed to, or close to, a front fork. The wireless power transmitter is fixed to one of the pillars of the booth.

The result is that the wireless power receiver on the LEV is visually very prominent. Furthermore, the magnetic alignment between the wireless power transmitter and the wireless power receiver is not reliably controlled in this arrangement, but such alignment is needed for efficient operation of the wireless charging system.

It has been proposed to design the front wheel of the LEV so that the wireless power receiver is hidden, for example internally within the wheel near the outer periphery. However, this results in a small receiving coil and hence a poor magnetic coupling.

Furthermore, by integrating the wireless power receiver into the wheel, a rotary electrical coupling is needed to deliver the induced charging current from the receiving coil to the stationary parts of the LEV (such as the battery). Typically, a sliding rotary electrical connection will be used, but this is prone to wear. A second wireless power transfer arrangement may instead be used to address the issue of wear. However, this adds complexity and a further reduction in efficiency.

There is therefore a need for an improved electric vehicle charging system which address some or all of these issues.

### SUMMARY OF THE INVENTION

The invention is defined by the claims.

According to examples in accordance with an aspect of the invention, there is provided an electric vehicle charging system, comprising:
a docking unit for receiving a wheel of a vehicle which incorporates a wireless charging receiving coil;
a drive arrangement for rotating a wheel which is received by the docking unit;
a wireless charging transmitting coil for transferring charge to the receiving coil of a wheel received by the docking unit;
a detection system for detecting relative alignment between the transmitting coil and the receiving coil; and
a controller configured to:
   control the drive arrangement to provide a desired relative alignment between the transmitting coil and the receiving coil in response to the detected relative alignment; and
   control wireless charging from the transmitting coil to the receiving coil.

This charging system drives a received wheel until a receiving coil of the wheel is correctly aligned with a transmitting coil of the charging system. In this way, a magnetic coupling between the coils is improved so that the charging efficiency is improved.

The docking unit for example comprises a set of rollers for engaging with a tire of the wheel, wherein at least one roller is driven by the drive arrangement.

The drive arrangement is thus able to rotate the received wheel with the rest of the vehicle stationary. The drive arrangement is for example bidirectional so that fine adjustment of the wheel position can be made (without having to complete full revolutions to make adjustments).

The detection system for example comprises a peak detector for detecting a resonance frequency at which a peak current or voltage results.

A primary resonance frequency results from the transmitting coil circuit characteristics, but the proximity of the receiving coil alters the frequency characteristics, in particular of a secondary resonance frequency, so that a shift in this second resonance frequency can be monitored to provide a measure of coil alignment.

The transmitting coil for example comprises a core having a loop with a closable opening for receiving a wheel rim, wherein the opening is configured to receive the wheel rim when open and is configured to close around the wheel rim to enable wireless charging.

The transmitting coil core thus clamps around the wheel rim (once it is in the correct position). This provides close proximity between the two coils (one of which is formed by the wheel rim itself). The transmitting coil for example comprises tightly wound coils around the ferrite core, whereas the receiving coil is a more open coil, for example following the shape of a portion of the wheel rim and spokes, but also magnetically coupled to the same ferrite core.

The transmitting coil for example comprises:
two arcuate cores which are moved apart and together to open and close the loop; or
two overlapping arcuate cores which are rotated concentrically relative to each other to open and close the loop.

The core of the transmitting coil may open and close laterally or it may have parts which slide over each other to open and close an opening. Any arrangement is possible which is controllable between an open shape and a closed shape, with a continuous ferrite path around the closed shape.

The invention also provides an electric vehicle configured to be charged by the vehicle charging system defined above, and comprising:
a wheel having a rim;
a wireless charging receiving coil incorporated into the wheel;
a battery; and
battery charging circuitry.

The receiving coil for example comprises a loop which includes an arcuate portion of the wheel rim, wherein the arcuate portion of the wheel rim is for receiving in a closable opening of a core of the transmitting coil of the vehicle charging system.

Thus, a portion of the wheel rim is received in a closable opening, to form a strong magnetic coupling between the transmitting coil and receiving coil.

The loop for example further comprises a connection between the ends of the arcuate portion, wherein said connection is positioned aligned with spokes of the wheel.

In this way, the receiving coil is made to be discrete in that it matches the shape of the wheel parts.

The electric vehicle for example comprises a rotary electrical coupling between the wireless charging receiving coil and the battery charging circuitry, wherein the electric vehicle further comprises an actuator for controlling mechanical engagement of the electrical coupling such that the electrical coupling is engaged in preparation for charging.

In this way, a rotary electrical coupling is used so that charge can be delivered to the battery charging circuitry in any position of the wheel. For example, sliding electrical contacts are used. However, these contacts are only used during charging, so that during use of the vehicle wear of the contacts is avoided. In this way, a mechanical (ohmic contact) electrical coupling may be used, which is more efficient than providing a second wireless energy transfer coupling.

The electric vehicle for example further comprises a load connected to the receiving coil, including when the rotary electrical coupling is not engaged.

In this way, when the rotary electrical coupling is not engaged, a load is still present in the receiving coil circuit. This load can be detected at the transmitting coil, so that a current or voltage can be measured which correlates with the alignment between the receiving coil and the transmitting coil. Thus, the load enables current sensing of the alignment between the coils.

The resonance frequency observed when the coils are aligned gives rise to a second resonance peak, and it is higher than the receiver resonance frequency e.g., of 200 to 300 kHz. A frequency sweep is for example carried out at the transmitter side, for example starting at 200 kHz and sweeping to a maximum of 1 MHz. By tracking the current or voltage it can be determined when a maximum measured value occurs at a certain frequency corresponding to correct alignment. Of course, these frequency values depend on the components used in the circuit including the added load.

Once alignment is achieved, a signal is generated that stops the rotating of the front wheel.

The invention also provides an electric vehicle system, comprising:
the vehicle charging system as defined above; and
the electric vehicle as defined above.

The invention also provides an electric vehicle comprising:
a wheel having a rim;
a wireless charging receiving coil incorporated into the wheel, comprising a loop which includes an arcuate portion of the wheel rim.

This vehicle uses a portion of the wheel rim to function as part of a receiving coil for receiving wireless energy transfer from a charging system.

The arcuate portion of the wheel rim is for example for receiving in a closable opening of a core of a transmitting coil of a vehicle charging system.

The loop further for example comprises a connection between the ends of the arcuate portion, wherein the connection is positioned aligned with spokes of the wheel. This makes the receiving coil integrated into the wheel have a discrete appearance.

The invention also provides an electric vehicle charging method, comprising:
receiving a wheel of a vehicle which incorporates a wireless charging receiving coil at a docking unit of an electric vehicle charging system, the electric vehicle charging system having a wireless charging transmitting coil for transferring charge to the wireless receiving coil;
rotating the wheel which is received at the docking unit while detecting relative alignment between the transmitting coil and the receiving coil; and
controlling wireless charging from the transmitting coil to the receiving coil when the wheel has been rotated to a desired relative alignment.

These and other aspects of the invention will be apparent from and elucidated with reference to the embodiment(s) described hereinafter.

### BRIEF DESCRIPTION OF THE DRAWINGS

For a better understanding of the invention, and to show more clearly how it may be carried into effect, reference will now be made, by way of example only, to the accompanying drawings, in which:
Fig. 1 shows a basic wireless charging system, comprising a wireless power transmitter and a wireless power receiver;
Fig. 2 shows an electric vehicle system for wireless charging of a light electric vehicle LEV;
Fig. 3 shows how the receiving coil and transmitting coil are aligned;
Fig. 4 shows a schematic diagram of the wireless LEV charging system;
Fig. 5 shows the input current as a function of frequency for a coupling factor in the range from 0.1 to 0.8;
Fig. 6 shows a block diagram of a wireless LEV charging system, including a search system for the implementing wheel rotation to provide receiver and transmitting coil alignment;
Fig. 7 shows one example of a possible design for the coils;
Fig. 8 shows the how design of Fig. 7 matches the wheel design;
Fig. 9 shows a bicycle wheel received in a docking unit;
Fig. 10 shows one example of the transmitting coil;
Fig. 11 shows the transmitting coil of Fig. 10 in the open state;
Fig. 12 shows that the receiving coil Ls may be configured as part of the wheel design;
Fig. 13 shows the structure of Fig. 12 combined to form the wheel;
Fig. 14 shows a 3D view of the receiving coil;
Fig. 15 shows schematically a basic electrical circuit diagram;
Fig. 16 shows an example of the rotary electrical coupling;
Fig. 17 shows an exploded view of the rotary electrical coupling;
Fig. 18 shows another view of the stationary printed circuit board;
Fig. 19 shows another design of the rotary electrical coupling;
Fig. 20 shows an exploded view of the rotary electrical coupling of Fig. 19;
Fig. 21 shows a further exploded view;
Fig. 22 shows another exploded view; and
Fig. 23 shows an internal view of the relay used in the rotary electrical coupling.

### DETAILED DESCRIPTION OF THE EMBODIMENTS

The invention will be described with reference to the Figures.

It should be understood that the detailed description and specific examples, while indicating exemplary embodiments of the apparatus, systems and methods, are intended for purposes of illustration only and are not intended to limit the scope of the invention. These and other features, aspects, and advantages of the apparatus, systems and methods of the present invention will become better understood from the following description, appended claims, and accompanying drawings. It should be understood that the Figures are merely schematic and are not drawn to scale. It should also be understood that the same reference numerals are used throughout the Figures to indicate the same or similar parts.

The invention relates to the charging of electric vehicles, and in particular using wireless power transfer between a transmitting coil of a charging station and a receiving coil which is integrated into a wheel (typically the front wheel) of the vehicle.

One design feature is that a docking unit, for receiving the wheel of a vehicle, has a drive arrangement for rotating the received wheel. Relative alignment between the transmitting coil and the receiving coil is detected, and the drive arrangement is controlled to provide a desired relative alignment between the transmitting coil and the receiving coil in response to the detected relative alignment. Another design feature is that the wireless charging receiving coil is incorporated into the wheel and comprises a loop which includes an arcuate portion of the wheel rim, wherein the arcuate portion of the wheel rim is for receiving in a closable opening of a core of the transmitting coil of the vehicle charging system. Another design feature is that a rotary electrical coupling is provided between the wireless charging receiving coil and battery charging circuitry. An actuator is provided for controlling mechanical engagement of the electrical coupling such that the electrical coupling is engaged in preparation for charging.

A system will now be described which combines these, and other, design features. However, various features may be used alone or in combination with other features, and the invention relates to individual aspects of the overall design, as defined by the claims.

Fig. 2 shows an electric vehicle system, namely an electric vehicle and a wireless charging system, in particular for a light electric vehicle LEV, the system provides improved magnetic coupling.

The electric vehicle system comprises a vehicle charging system 30 in the form of a bicycle storage station where the front wheel of a LEV can be placed, such that the front wheel can still rotate while parked.

The front wheel 40 of the LEV is supported by two rollers 42 and a bi-directional drive roller 44 for driving the front wheel. The front wheel 40 is equipped with a single receiving coil 50 that covers only a small part of the area of the wheel. The receiving coil 50 is intended to be located at a fixed position relative to the charging station, and is placed close to the outer circumference of the front wheel.

The bicycle storage station is equipped with a wireless power transmitter having a transmitting coil 52. The transmitting coil 52 of the wireless power transmitter has a similar size to the receiving coil and is located close to the front wheel.

The placement of an LEV in the bicycle storage station will automatically be detected by the wireless LEV charging system. This may be achieved by a mechanical switch (not shown) which is engaged when the wheel is docked.

There is a controller 54 which implements part of a detection system for detecting relative alignment between the transmitting coil and the receiving coil. Directly after parking has been detected, the charging system starts searching for the receiving coil 50 by rotating the front wheel using the drive roller 44 under the control of the controller 54. When the transmitting coil and receiving coil are aligned, a recognizable signal is generated, and the rotating of the front wheel is stopped. In this situation, the maximum coupling factor between the transmitting coil and the receiving coil is achieved.

The controller 54 then also control wireless charging from the transmitting coil to the receiving coil.

This charging system thus drives a received wheel until a receiving coil of the wheel is correctly aligned with a transmitting coil of the charging system. In this way, a magnetic coupling between the coils is improved so that the charging efficiency is improved.

The magnetic coupling between the transmitting coil inside the wireless power transmitter and the receiving coil inside the wheel may be optimized by matching the sizes of the transmitting coil and the receiving coil, as well as ensuring correct alignment between the coils.

Because the receiving coil rotates in the wheel, the received power needs to be transferred via the wheel axis towards the battery and battery charging circuitry in the LEV body. As discussed further below, an electro-mechanical rotary electrical coupling is employed for this purpose.

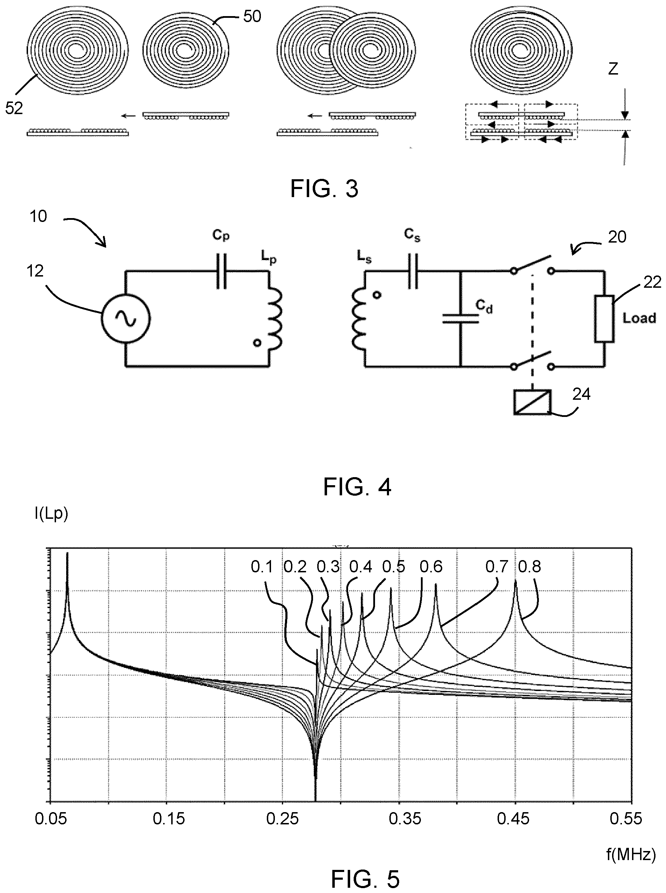

Fig. 3 shows how the receiving coil 50 and transmitting coil 52 are aligned. The maximum magnetic coupling is shown when the coils align, as shown in the right image, with concentric coil alignment. If the ratio of the diameter of the two coils is 1 (i.e., the coils are the same size) the magnetic coupling will be optimum. Although the magnetic coupling can be automatically adjusted to a maximum level by the position adjustment, the disc shaped and side-by-side transmitting and receiving coils show a maximum coupling factor of the order of 0.3 to 0.5, depending on a degree of alignment and the separation distance Z. This distance Z results in the generation of stay fields so that in practical conditions the maximum coupling is limited.

As mentioned above, power needs to be transferred from the receiving coil in the wheel to the stationary parts of the vehicle, i.e., the battery and battery charging control circuity.

A problem with a rotary mechanical and electrical contact is wear of sliding contacts or carbon brushes of a commutator. One option is to use a further wireless (non-contact) power transfer arrangement, but this reduces the efficiency of the system.

Another aspect of the overall design is a rotary electrical coupling which can be connected and disconnected, for example using a relay to control the engagement and disengagement of physical (ohmic) contacts. The electrical coupling makes physical electrical and mechanical contact when connected but is disconnected when not needed. In particular, in the case of a wirelessly charged LEV such as an e-bike, this charging takes place in a stand-still condition. In all other road conditions, during cycling, no contact is needed. By means of the rotary electrical coupling, which is only closed during power transfer, wear of the contacts can be avoided.

Fig. 4 shows a schematic diagram of the wireless LEV charging system. The circuit is an improvement to the circuit of Fig. 1, and additionally includes a load capacitor Cd in the receiving circuit and the rotary electrical coupling.

In general, when no load is connected to the terminals of the wireless power receiver 20, it is hard to align the transmitting coil and the receiving coil by electronic means. For instance, measuring the current through the transmitting coil does not result in any detectable maximum signal when the transmitting coil and the receiving coil are at their maximum alignment because the current through the wireless power receiver is zero. Therefore, the (small) load capacitor Cd is used as a non-dissipative preload for the wireless power receiver, when the rotary electrical coupling 24 is still in the "open" state. This load Cd is connected to the receiving coil, including when the rotary electrical coupling is not engaged.

In this way, when the coupling is not engaged, a load is still present in the receiving coil circuit. This load can be detected at the transmitting coil, so that a current can be measured which correlates with the alignment between the receiving coil and the transmitting coil. Thus, the load enables current or voltage sensing of the alignment between the coils without a connection to the load.

Fig. 5 shows the input current I(Lp) as a function of frequency for a K-factor in the range from 0.1 to 0.8. It shows a first, primary, maximum current near 80 kHz (by way of example), mainly due to the primary resonance frequency of capacitor Cp with inductor Lp. When the receiving coil is placed in the proximity of the transmitting coil, the primary resonance frequency will be shifted but only slightly because of the proximity effect.

The existence of capacitor the load Cd, together with capacitor Cs and inductance Ls, results in a minimum of the current I(Lp) at a relatively high resonance frequency of approximately 200 to 300 kHz (for example), independent of the coupling factor as can be seen in Fig. 5 by the further peaks.

This is called the "receiver" resonance frequency. Because the receiver resonance frequency of 200 to 300 kHz is relatively high, the additional capacitor Cd will hardly influence the primary resonance frequency. A factor of 5 to 10 between the primary resonance frequency and the receiver frequency is sufficient to achieve this. As can be seen, this circuit behaves as a high impedance for frequencies in the range from 80 kHz to 200 kHz.

Beyond 200 to 300 kHz, several resonance frequency peaks become visible. The larger the K-factor between the transmitting coil and the receiving coil, the larger the frequency of the second resonance peak. The location of the second resonance peak is determined by capacitor Cd, capacitor Cs, inductance Lp and inductance Ls.

When the load of the wireless receiver is still disconnected, and the coupling between the transmitting coil and the receiving coil is low, the receiver resonance and the second resonance peak are closer together. When the coupling between the transmitting coil and the receiving coil increases, the second peak will move to a higher frequency. Thus, the better the coupling, the higher the second resonance frequency. A peak detector may be used for detecting a resonance frequency at which a peak current or voltage results, and this resonance frequency is indicative of the coupling quality. Thus, the second resonance frequency may be used as an alignment measure.

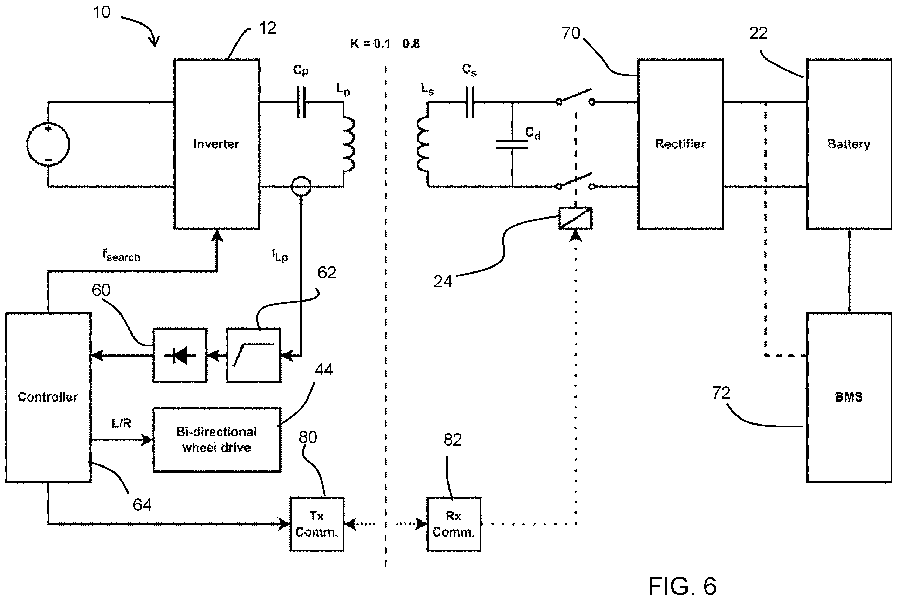

Fig. 6 shows a block diagram of the wireless LEV charging system, including the search system for the implementing wheel rotation to provide receiving coil and transmitting coil alignment.

The transmitter 10 comprises the inverter 12, transmitting coil Lp and resonant capacitor Cp. The primary current is provided to a peak detector 60 via a high pass filter 62, and a controller 64 processes the peak detector signal to derive a control signal for the wheel drive roller 44 as well as to control the inverter 12 to implement wireless power transfer.

The receiver 20 comprises the receiving coil Ls and resonant capacitor Cs, and the load capacitor Cd. A rectifier 70 converts the received AC power into a DC battery charging current, which is then controlled by a battery management system 72.

If the parking of an LEV in the bicycle storage station is detected (for example by a separate mechanical switch engaged when the bicycle wheel is received), it will start searching for the receiving coil by rotating the front wheel.

If the transmitting coil and the receiving coil are still misaligned, no second resonance peak exists. However, if the transmitting coil and the receiving coil become closer, the second resonance frequency will appear. The frequency of the second resonance peak will always be higher than the receiver resonance frequency of 200 to 300 kHz. Therefore, the start frequency of the inverter may be set to 200 kHz and it may sweep to a maximum of 1 MHz (in this example). By synchronously increasing the inverter frequency and tracking the current I(Lp) via the high pass filter and the peak detector, it can be determined if a maximum current I(Lp) occurs at a certain frequency.

If the maximum current I(Lp) is detected at a given frequency, the transmitting coil and the receiving coil are fully aligned. Fine tuning of the system can be achieved by adjusting the direction of the rotating wheel to get as close as possible to the maximum.

If the maximum is detected, a signal is generated that stops the rotating of the front wheel. In this situation the maximum coupling factor between the coils is achieved.

If the search system is not able to find a second resonance or impedance change, it knows that a receiving coil has not been found yet or that the wheel that is placed in the bicycle storage station doesn't have a coil in it at all.

After the transmitting coil and the receiving coil are aligned by the wireless LEV charging system, a communication link is established between the inductive power transmitter and the inductive power receiver with the Battery Management System (BMS).

This is shown by transmitter 80 and receiver 82. This can be implemented via an in-band communication link, blue tooth etc. After communication has been established, the inductive power transfer can start to charge the battery.

For this purpose, a signal is sent via the communications link 80, 82, from the controller 64 of the inductive power transmitter to the inductive power receiver to activate the relay switch of the rotary electrical coupling 24. The mechanical contacts of the relay switch will in this way only be closed during charging to overcome wear of the contacts during normal use of the LEV.

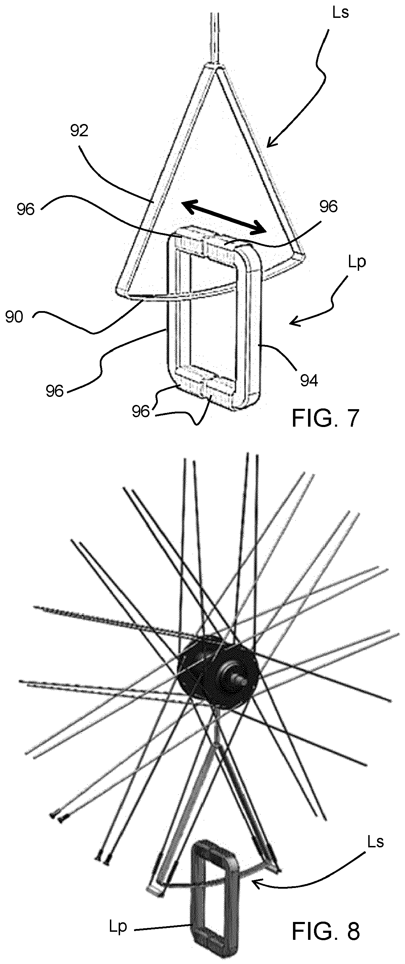

One example of possible design for the coils will now be described, as shown in Fig. 7.

The transmitting coil Lp comprises a ferrite core which forms a closed loop around a portion of the receiving coil Ls, and a coil around the ferrite core.

The ferrite core in this example comprises two arcuate core portions 92, 94 which are moved apart and together to open and close the loop, as represented by the arrow in Fig. 7. The transmitting coil Lp comprises windings around at least one of the arcuate core portions. In the example shown, each arcuate core portion 92, 94 has a winding arrangement 96 around each of its two ends.

In the closed configuration, the transmitting coil Lp comprises a closed ferrite core with tightly wound coils. The secondary coil may be considered to comprise a loosely wound coil. It is defined by an arcuate portion 90 which follows the shape of the wheel rim and spoke portions 92 which follow the shape of the wheel spokes. The spoke portions provide a connection between the ends of the arcuate portion.

The receiving coil thus has the shape of an open space between the wheel spokes, as such being least visible and eventually not disturbing the bicycle design. The airgap in the ferrite core is kept to a minimum to reduce the stray fields.

In this way, the vehicle has a wheel having a rim and the wireless charging receiving coil is incorporated into the wheel and comprises a loop which includes an arcuate portion of the wheel rim. A portion of the wheel rim thus functions as part of the receiving coil.

Fig. 8 shows how the design of Fig. 7 matches the wheel design.

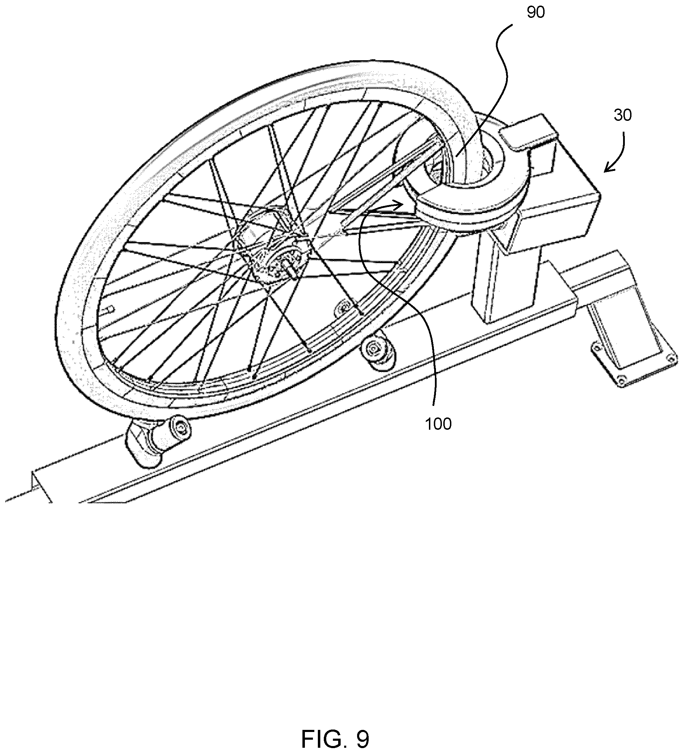

Fig. 9 shows a bicycle wheel received in a docking unit 30. It shows that the arcuate portion 90 of the wheel rim is received in a closable opening 100 of the core of the transmitting coil Lp.

By closing the core of the transmitting coil Lp around the wheel rim, the transmitting coil can be designed as a tightly wound coil and a good K factor is achieved. The transmitting coil core is able to be opened and closed to allow the wheel to enter. When the bicycle is placed in the bicycle storage station, the front wheel is moved inside the open core. If the bike is detected, the front wheel is rotated as explained above. Once the transmitting and receiving coils have become aligned, the front wheel stops rotating, and the core is closed to further increase the coupling factor.

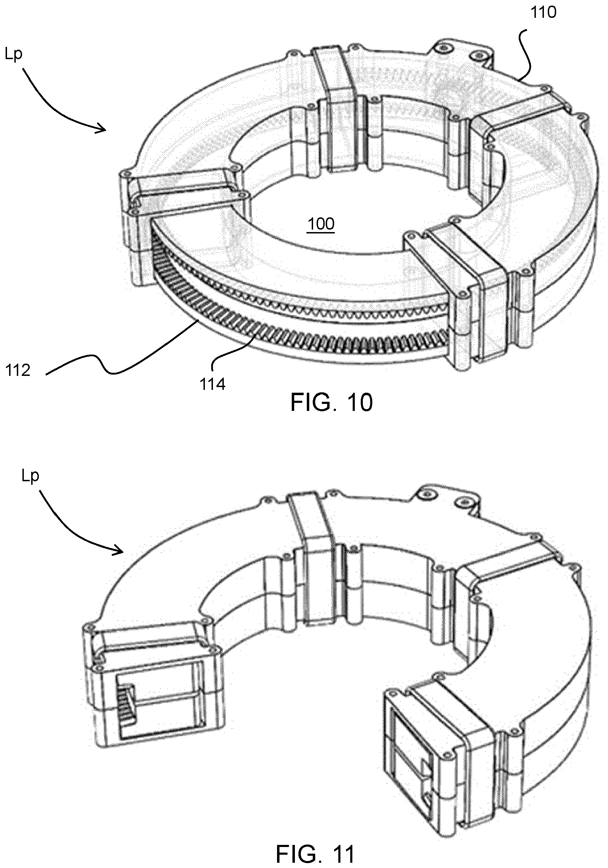

Fig. 10 shows another example of the transmitting coil Lp. It again comprises a ferrite core and a coil wrapped around the core. The ferrite core in this example comprises a first arcuate section 110 with an opening 100, and a second arcuate section 112 which is slidably received inside the first section. It is rotatably drivable so that it can expose the opening or close the opening to form a continuous ferrite loop. The rotatable drive comprises a drive cog and worm gear 114.

Thus, instead of moving core portions towards and apart from each other laterally, two overlapping arcuate cores are rotated concentrically relative to each other to open and close the closed loop to be defined by the core.

In one example, one or more coil arrangements are wound around the static arcuate section 110, for example with coil arrangements around the two ends of the static arcuate section 110 similarly to the approach shown in Fig. 7. There may however be a coil arrangement only at one location around the ferrite core. The coil arrangement or arrangements induce a magnetic field around the ferrite core, providing magnetic coupling to the receiving coil Ls. The ferrite core is thus used to guide the magnetic flux created by the one or more coil arrangements around the ferrite core.

Fig. 11 shows the transmitting coil with its core in the open state.

There are various possible designs for the core of the transmitting coil to implement a closable opening.

The example of Figs. 10 and 11 has two concentric arcuate ferrite portions that rotate concentrically with respect to each other. When the two cores are fully rotated over each other, a welldefined magnetic flux path is created. Because of the relatively large overlap area the stray flux is kept to a minimum. An advantage of this construction with overlapping ferrite is that the coupling factor between transmitter and receiving coil is increased to around 0.6.

Another example is to form two semi-circular arcuate portions that are laterally moved together and apart as has been shown in Fig. 7. In this way, there is a crossing path from ferrite core to ferrite core goes using two opposite facing surfaces. A construction with opposite facing ferrite elements enables the coupling factor between the transmitting coil and receiving coil to be increased to around 0.5.

Other examples are possible as long as parts move relative to each other to open and close an opening, and wherein a continuous ferrite path is formed around the closed shape. In all examples, mechanical and electronic means can be applied to move the elements as desired.

The closing of the transmitting coil also functions as part of a lock to prevent theft of the vehicle.

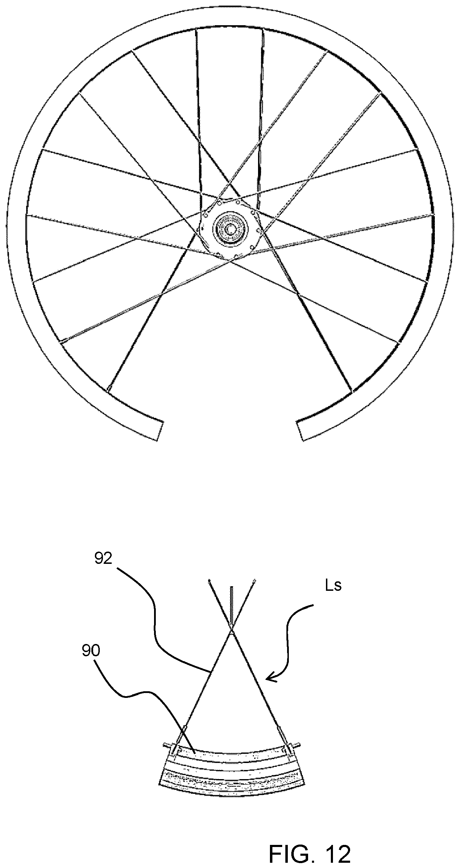

Fig. 12 shows that the receiving coil Ls may be configured as part of the wheel design, including the arcuate portion 90 and the spoke portions 92. Fig. 12 shows the receiving coil part of the wheel design separately to the remainder of the wheel.

To avoid that magnetic flux induces eddy currents in the rim, one option is to remove a part of the rim locally as shown in the top image of Fig. 12 and replace it by a non-conductive part, as shown in the bottom part of Fig. 12.

The wheel rim is typically an aluminum extrusion which is rolled to a circle by a profile rolling machine whereafter both open ends are mechanically connected. Thus, the connection of an additional section between the rolled ends does not represent a significant additional weakness. The non-conductive part may simply comprise non-conductive end spacers, and a conductive central section.

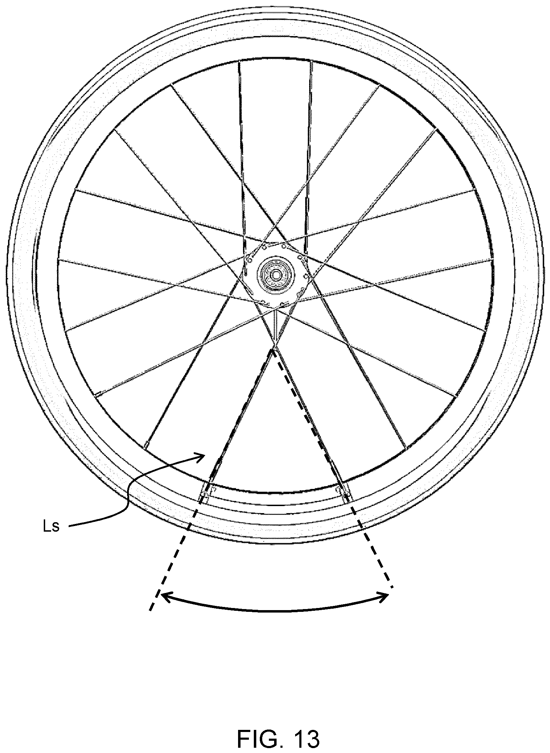

Fig. 13 shows the structure of Fig. 12 combined to form the wheel. The arcuate portion for example extends around an angle of 36 degrees but of course other angles may be used to match spoke designs.

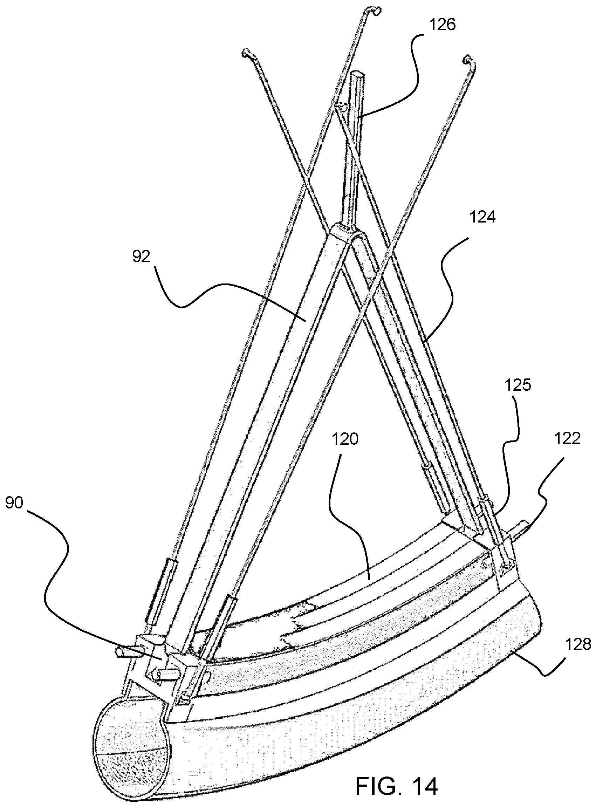

Fig. 14 shows a 3D view of the receiving coil Ls. The arcuate portion 90 is housed within a non-conductive housing 120 which forms a non-metal rim segment. The non-conductive housing 120 has connection pins 122 for interfacing with the remainder of the wheel rim, which is typically an aluminum extruded form, as mentioned above.

The receiving coil spoke portions 92 for example comprise a co-molded plastic injection unit. The spoke portions are separate and additional to the structural spokes 124 (and their tensioning nuts 125) but they may be aligned (from a side view). A wire 126 extends from the receiving coil to the hub, where the rotary electrical contact is housed.

The tire 128 for example should avoid having metal reinforcement.

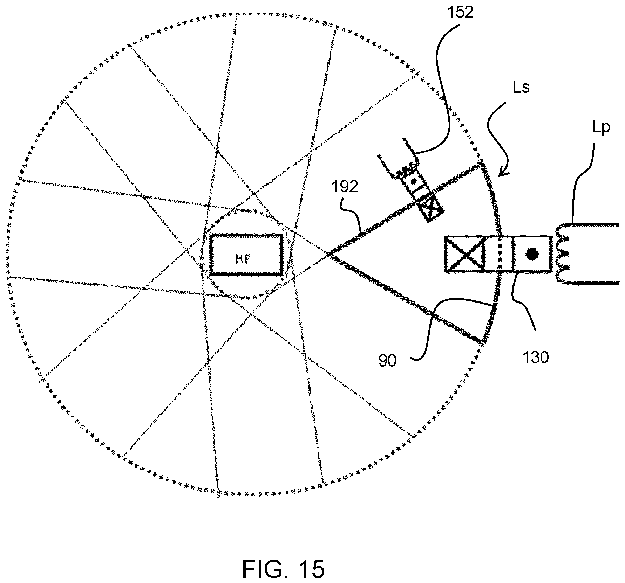

Fig. 15 shows schematically a basic electrical circuit diagram. It shows the transmitting coil Lp which energizes the ferrite core 130 which passes around the wheel rim, and hence around the arcuate portion 90 of the secondary coil Ls.

Fig. 15 also shows a separate charging unit 152. This is for example a handheld power-clamp that a user can clamp to the wheel at home to perform recharging. The compact clamp charger is for example fitted around one of the two spoke portions 92 of the receiving coil Ls. The clamp charger can have a compact size, since it doesn't need to fit around the rim and tire.

As explained above, one aspect of the design is a rotary electrical contact which can be opened and closed by means of an actuator.

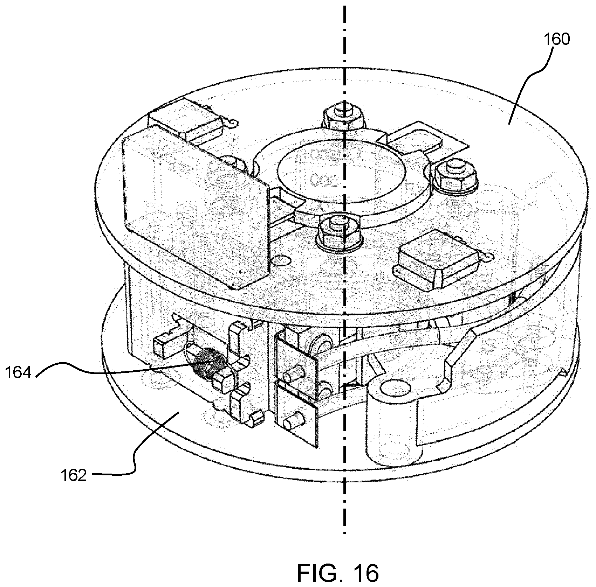

Fig. 16 shows an example of the rotary electrical contact. It is formed from a rotating printed circuit board 160 and a stationary printed circuit board 162. An actuator in the form of a relay 164 controls the activation and deactivation of the rotary electrical contact.

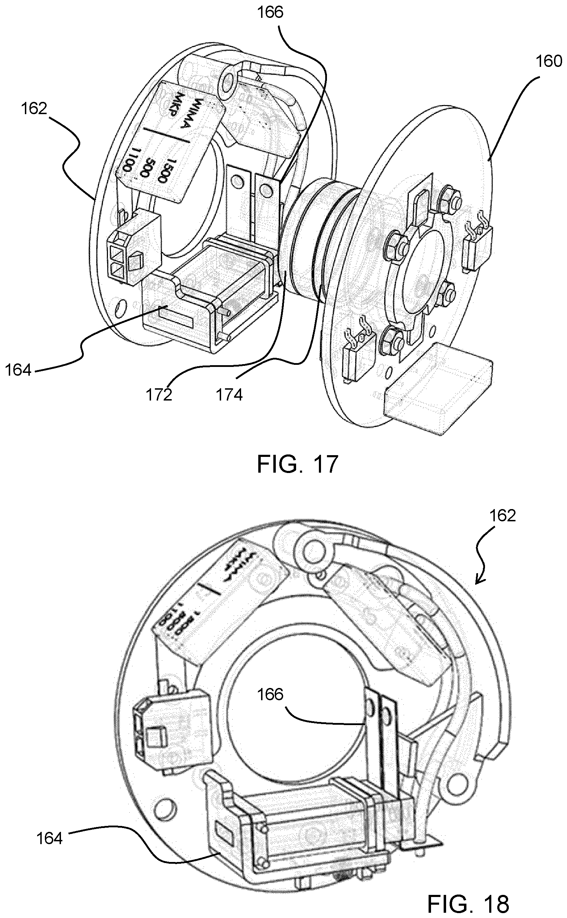

As shown in the exploded view of Fig. 17, the relay moves a contact bridge assembly 166 of the static printed circuit board. The contact bridge assembly has flexible contacts that connect to conductor tracks formed as two concentric contact paths 172, 174 that rotate with the rotating printed circuit board 160. When the relay is engaged, the contact bridge connects to the concentric contact paths 172,174. The contact bridge is positioned around the wheel shaft axis, with defined concentricity, contact distance and parallel alignment.

Fig. 18 shows another view of the stationary printed circuit board 162.

In the design of Figs. 16 to 18, the conductor tracks comprise cylindrical surfaces extending around the axis of rotation of the wheel and in adjacent parallel planes. The actuator (relay) is configured to move the contact bridge radially relative to the axis of rotation of the wheel. Thus, in this design, the two circuit boards are side by side. The contact bridge spans across the outer circumference of the tracks, and the tracks rotated beneath the contacts.

There are other possible designs.

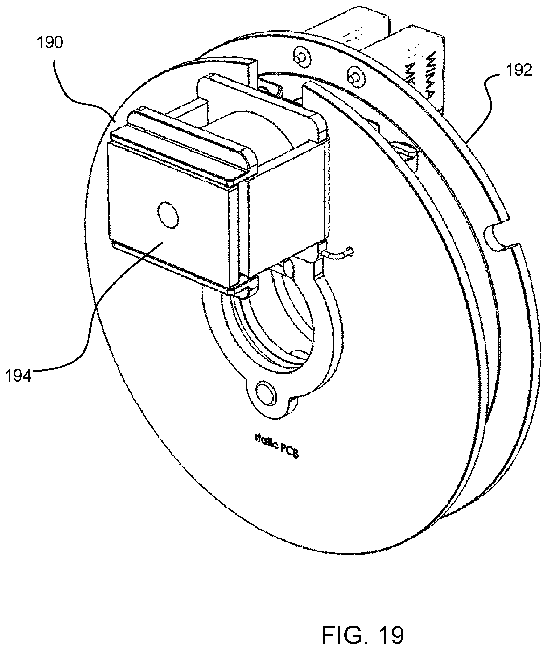

Figs. 19 to 23 show a second design in which the conductor tracks lie in planes perpendicular to an axis of rotation of the wheel, and the actuator is configured to move the contact bridge in a direction parallel to the axis of rotation of the wheel.

Fig. 19 shows the stationary printed circuit board 190 with its relay 194 and the rotating printed circuit board 192.

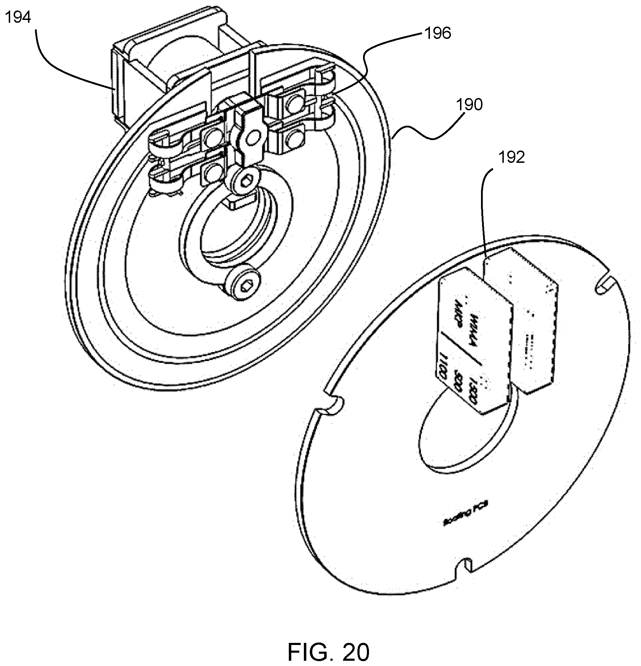

The exploded view of Fig. 20 shows the contact bridge assembly 196 which is fixed to the stationary printed circuit board.

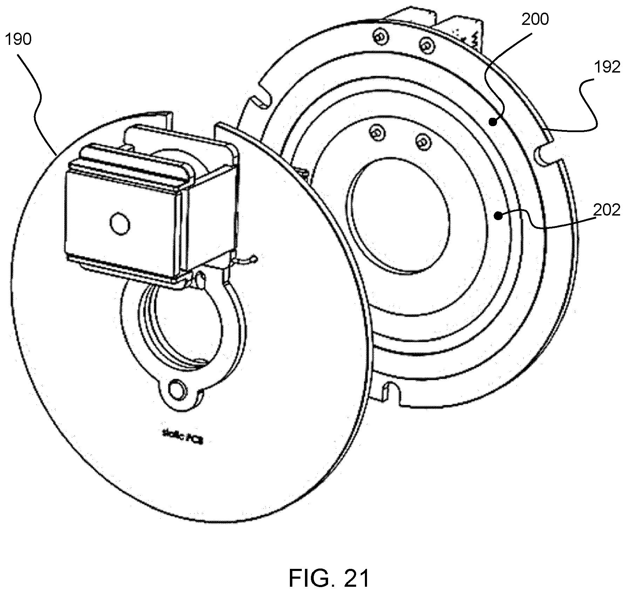

The exploded view of Fig. 21 shows the concentric tracks 200, 202 on the rotating printed circuit board 192.

In this design, the contact bridge 196 spans the gap between two parallel and spaced circuit boards. It is moved parallel to the rotation axis, hence in an axial direction and the tracks lie in a plane perpendicular to the rotation axis.

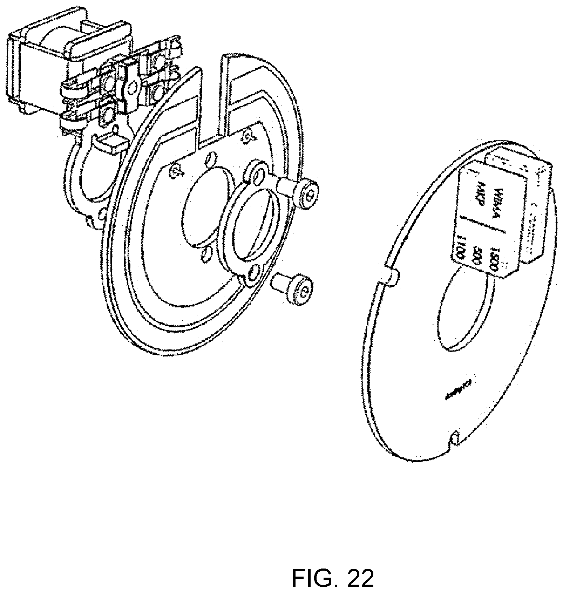

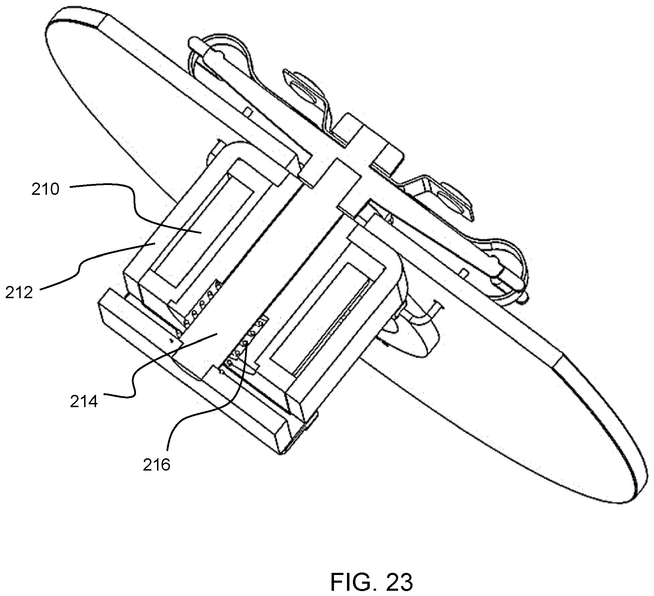

Fig. 22 shows another exploded view, and Fig. 23 shows an internal view of the relay. It shows the relay coil 210 and coil isolator 212, as well as the iron core 214 and retraction spring 216.

In another design, the conductor tracks comprise cylindrical surfaces extending around an axis of rotation of the wheel and axially aligned (so one is radially outside the other), and the actuator is configured to move the contact bridge radially relative to the axis of rotation of the wheel between the two concentric circuit boards. In this design, the two circuit boards can be co-planar, e.g., one concentrically around the other, hence taking up less space. The contact bridge moves radially between them.

The actuator may then be configured to move the contact bridge radially to disengage the electrical coupling in response to a centrifugal force resulting from rotation of the wheel. In this design, wheel rotation can automatically break the contact made by the contact bridge. The activation to make contact is in this way achieved by a spring force, and the absence of centrifugal force due to non-movement of the wheel. The contacts are for example provided with a suitable mass and are connected by hinges to the hub of the wheel so that they expand outwardly when rotating against the spring force.

Variations to the disclosed embodiments can be understood and effected by those skilled in the art in practicing the claimed invention, from a study of the drawings, the disclosure and the appended claims. In the claims, the word "comprising" does not exclude other elements or steps, and the indefinite article "a" or "an" does not exclude a plurality.

Functions implemented by a processor may be implemented by a single processor or by multiple separate processing units which may together be considered to constitute a "processor". Such processing units may in some cases be remote from each other and communicate with each other in a wired or wireless manner.

The mere fact that certain measures are recited in mutually different dependent claims does not indicate that a combination of these measures cannot be used to advantage.

If the term "adapted to" is used in the claims or description, it is noted the term "adapted to" is intended to be equivalent to the term "configured to". If the term "arrangement" is used in the claims or description, it is noted the term "arrangement" is intended to be equivalent to the term "system", and vice versa.

Any reference signs in the claims should not be construed as limiting the scope.

## Claims

1. An electric vehicle charging system, comprising:
a docking unit (30) for receiving a wheel of a vehicle which incorporates a wireless charging receiving coil (Ls);
a drive arrangement (44) for rotating a wheel (40) which is received by the docking unit;
a wireless charging transmitting coil (Lp) for transferring charge to the receiving coil (Ls) of a wheel received by the docking unit;
a detection system (60,62) for detecting relative alignment between the transmitting coil and the receiving coil; and
a controller (54) configured to:
control the drive arrangement (44) to provide a desired relative alignment between the transmitting coil (Lp) and the receiving coil (Ls) in response to the detected relative alignment; and
control wireless charging from the transmitting coil (Lp) to the receiving coil (Ls).

2. The system of claim 1, wherein the docking unit comprises a set of rollers (42, 44) for engaging with a tire of the wheel, wherein at least one roller (44) is driven by the drive arrangement.

3. The system of any one of claims 1 to 2, wherein the detection system comprises a peak detector (60) for detecting a resonance frequency at which a peak current or voltage results.

4. The system of any one of claims 1 to 3, wherein the transmitting coil (Lp) comprises a core having a loop with a closable opening for receiving a wheel rim, wherein the opening is configured to receive the wheel rim when open and is configured to close around the wheel rim to enable wireless charging.

5. The system of claim 4, wherein the transmitting coil (Lp) comprises:
two arcuate core portions (92, 94) which are moved apart and together to open and close the loop; or
two overlapping arcuate core portions (110,112) which are rotated concentrically relative to each other to open and close the loop.

6. An electric vehicle configured to be charged by the vehicle charging system of any one of claims 1 to 5, comprising:
a wheel (40) having a rim;
a wireless charging receiving coil (Ls) incorporated into the wheel;
a battery (22); and
battery charging circuitry (72).

7. The electric vehicle of claim 6, wherein the receiving coil (Ls) comprises a loop which includes an arcuate portion (90) of the wheel rim, wherein the arcuate portion of the wheel rim is for receiving in a closable opening of a core of the transmitting coil of the vehicle charging system.

8. The electric vehicle of claim 7, wherein the loop further comprises a connection (92) between the ends of the arcuate portion, wherein said connection is positioned aligned with spokes of the wheel.

9. The electric vehicle of claim 6, 7 or 8, comprising a rotary electrical coupling (24) between the wireless charging receiving coil (Ls) and the battery charging circuitry (72), wherein the electric vehicle further comprises an actuator (64) for controlling mechanical engagement of the rotary electrical coupling (24) such that the rotary electrical coupling is engaged in preparation for charging.

10. The electric vehicle of claim 9, further comprising a load (Cd) connected to the receiving coil (Ls), including when the rotary electrical coupling (24) is not engaged.

11. An electric vehicle system, comprising:
the vehicle charging system of any one of claims 1 to 5; and
the electric vehicle of any one of claims 6 to 10.

12. An electric vehicle comprising:
a wheel (40) having a rim;
a wireless charging receiving coil (Ls) incorporated into the wheel, comprising a loop which includes an arcuate portion (90) of the wheel rim.

13. The electric vehicle of claim 12, wherein the arcuate portion (90) of the wheel rim is for receiving in a closable opening of a core of a transmitting coil of a vehicle charging system.

14. The electric vehicle of claim 12 or 13, wherein the loop further comprises a connection (92) between the ends of the arcuate portion (90), wherein the connection is positioned aligned with spokes of the wheel.

15. An electric vehicle charging method, comprising:
receiving a wheel of a vehicle which incorporates a wireless charging receiving coil at a docking unit of an electric vehicle charging system, the electric vehicle charging system having a wireless charging transmitting coil for transferring charge to the wireless receiving coil;
rotating the wheel which is received at the docking unit while detecting relative alignment between the transmitting coil and the receiving coil; and
controlling wireless charging from the transmitting coil to the receiving coil when the wheel has been rotated to a desired relative alignment.
